# EUROPÄISCHE PATENTSCHRIFT

(11) **EP 2 469 141 B1**
(45) Veröffentlichungstag und Bekanntmachung des Hinweises auf die Patenterteilung: **02.03.2016**
(21) Anmeldenummer: 11190081.7
(22) Anmeldetag: 22.11.2011
(51) Int. Cl.: F16L 5/04, F16L 5/10, H02G 3/22

(54) **Dichtschlauch**
Seal hose
Tuyau étanche

(30) Priorität: 21.12.2010 DE 102010063652
(43) Veröffentlichungstag der Anmeldung: 27.06.2012
(73) Patentinhaber: HILTI Aktiengesellschaft, 9494 Schaan (LI)
(72) Erfinder: Klein, Manfred, 86916 Kaufering (DE); Hager, Tom, 67705 Trippstadt (DE)
(74) Vertreter: Hilti Aktiengesellschaft Corporate Intellectual Property

(56) Entgegenhaltungen:
- EP-A1- 0 940 615
- WO-A1-2010/067637
- DE-A1-102005 001 796
- DE-A1-102006 035 475
- US-A- 4 194 750

## Beschreibung

Die Erfindung betrifft einen Dichtschlauch für eine Leitungsdurchführung, in der der Dichtschlauch mit um seine Längsachse relativ zueinander verdrehten Enden gehalten werden kann.

Ein solcher Dichtschlauch ist aus der DE 10 2006 035 475 A1 bekannt. Die Leitungsdurchführung dient dazu, Leitungen wie Rohrleitungen, Kabel oder Kabelkanäle durch andere Bauteile hindurchzuführen, beispielsweise durch Decken oder Wände. Die Leitungsdurchführung soll dabei zum einen ermöglichen, nachträglich Leitungen auszutauschen oder hinzuzufügen, und zum anderen soll eine Abdichtung insbesondere gegen Rauchgas verwirklicht werden. Zu diesem Zweck wird der Dichtschlauch verwendet, durch den hindurch die Leitungen von einer Seite der Wand oder Decke auf die andere Seite geführt werden. Nach der Montage der Leitungen werden die beiden Enden des Dichtschlauchs relativ zueinander verdreht, wodurch sich die Wandung des Dichtschlauchs spiralförmig nach innen zieht und eng an die Leitungen anlegt. Auf diese Weise wird eine hohe Dichtigkeit erreicht.

Aus der oben genannten Druckschrift ist bereits bekannt, auf der Innenseite des Dichtschlauchs ein dünnes Schaumstoff- oder Gummimaterial entweder als durchgehende Beschichtung oder in Form von Längsstreifen oder Rippen aufzubringen. Obwohl dieses Dichtungsmaterial die Dichtungswirkung im Bereich des Kontakts mit den Leitungen verbessert, hat sich herausgestellt, dass gleichzeitig die Verdrehung, insbesondere die notwendige Faltenbildung behindert wird.

Die Aufgabe der Erfindung besteht darin, einen Dichtschlauch der eingangs genannten Art dahin gehend weiterzubilden, dass sich eine nochmals verbesserte Abdichtwirkung ergibt.

Zur Lösung dieser Aufgabe ist erfindungsgemäß vorgesehen, dass im Inneren des Dichtschlauches mehrere separate Dichtelemente angeordnet sind. Die Dichtelemente sind etwa in der Mitte des Dichtschlauches, also auf der Hälfte seiner Länge, angeordnet und deren Länge erstreckt sich im Wesentlichen entlang des Umfangs, d.h. quer zur Längsachse des Dichtschlauchs. Die Dichtelemente sind unterbrochen und ergeben erst im geschlossenen Zustand, das heißt nach dem Verdrehen des Dichtschlauchs, einen Ring. Dabei wirken die Dichtelemente nach Art einer ringförmigen Barriere, die vom Dichtschlauch in radialer Richtung nach innen gegen die Leitungen gepresst wird. Auf diese Weise ergibt sich eine besondere gute Abdichtung.

Die Dichtelemente sind entlang einer Linie, die den Umfang des Dichtschlauches beschreibt, angeordnet, wobei die Dichtelemente nicht zwangsläufig gleichgerichtet auf der Linie angeordnet sein müssen. Eine schräge und/oder unregelmäßige Anordnung erfüllt ebenso wie eine gerade Anordnung die Aufgabe, eine verbesserte Abdichtwirkung zu erzielen.

Die Erfindung beruht auf der überraschenden Erkenntnis, dass es mit mehreren kurzen, im Abstand voneinander angeordneten Dichtelementen möglich ist, eine insgesamt bessere Abdichtung zu erzielen, ohne dass dadurch die Verformbarkeit der Wandung des Dichtschlauchs beeinträchtigt wird.

Vorzugsweise ist vorgesehen, dass die Dichtelemente in Umfangsrichtung des Dichtschlauchs voneinander beabstandet sind. Dies ermöglicht der Wandung des Dichtschlauchs, sich ungehindert von den Dichtelementen in Umfangsrichtung spiralförmig zusammenzuziehen.

Vorzugsweise ist vorgesehen, dass die Gesamtlänge der Dichtelemente kleiner als der Umfang des Dichtschlauchs ist, wobei sich die Gesamtlänge aus der Summe der Längen der Elemente, die in einer Schnittebene liegen, welche durch einen Schnitt durch den Schlauch senkrecht zu seiner Längsachse definiert wird, berechnet. Bei einer schrägen und/oder unregelmäßigen Anordnung der Dichtelemente kann somit die tatsächliche Summe der Länge der Einzelelemente länger als der Umfang des Dichtschlauchs sein. Besonders bevorzugt beträgt die Gesamtlänge der Dichtelemente etwa 50 % des Umfangs des Dichtschlauches.

Entgegen der vorherrschenden Meinung, wonach möglichst große Dichtelemente verwendet werden sollten, um einen großflächigen Kontakt mit den Leitungen zu gewährleisten, hat sich erfindungsgemäß herausgestellt, dass bereits sehr kleine Dichtelemente in der Lage sind, die gewünschte Abdichtung gegen den Durchtritt von gasförmigen Medien zu erreichen. Der besondere Vorteil der erfindungsgemäßen Dichtelemente besteht darin, dass sie das Verformen der Wandung kaum beeinträchtigen, so dass diese sich ungehindert dicht an die Leitungen anlegen kann.

Gemäß einer Ausführungsform der Erfindung sind sechs Dichtelemente vorgesehen, die in Umfangsrichtung des Dichtschlauchs gleichmäßig voneinander beabstandet angeordnet sind. Vorzugsweise entspricht die Länge eines einzelnen Dichtelements etwa 8 % des Umfangs des Dichtschlauchs. Diese Ausgestaltung beruht auf der Erkenntnis, dass bereits mit vergleichsweise wenigen Dichtelementen eine sehr gute Dichtwirkung erreicht werden kann.

Vorzugsweise ist vorgesehen, dass die Dichtelemente einen dreieckigen Querschnitt haben. Diese Querschnittsform erleichtert es den Dichtelementen, sich an die im Inneren des Dichtschlauchs liegenden Leitungen anzupassen und an diese dicht anzuliegen.

Vorzugsweise ist vorgesehen, dass die Dichtelemente quer zu ihrer Längsrichtung geschlitzt sind. Auch dies unterstützt das dichte Anliegen der Dichtelemente an den Leitungen, da die Dichtelemente aufgrund der Schlitze besonders flexibel nachgeben können.

Die Höhe der Dichtelemente muss so gewählt werden, dass diese einerseits möglichst tief in die Zwischenräume der äußeren Kabel des Kabelstrangs eindringen aber andererseits die Belegung des Dichtschlauchs mit Kabeln bei geöffnetem Schlauch nicht behindert wird. Als vorteilhaft hat sich eine Höhe zwischen 5 mm und 20 mm erwiesen. Besonders bevorzugt beträgt die Höhe 11 mm. Die Höhe der Dichtelemente ist dabei unabhängig vom Umfang des Dichtschlauches und von der Länge der Dichtelemente.

Das Material der Dichtelemente muss so beschaffen sein, dass es hinreichend elastisch ist und sich möglichst lückenlos an den Kabelstrang anlegt, um die zwischen den äußeren Kabeln des Kabelstrangs entstehenden Lücken im Wesentlichen abzudichten. Darüber hinaus muss sichergestellt werden, dass das Material selbst dicht ist, d.h. im Brandfall keine Rauchgase durch das Material dringen können. Dementsprechend sollte das Material luftundurchlässig sein. Geeignete Materialien sind offen-, geschlossen- und gemischtzellige Schäume, wobei die offenzelligen vorzugsweise eine im Wesentlichen geschlossene Oberfläche aufweisen. Beispielhaft können Integralschäume, Silikone, Elastomere, wie natürliche und synthetische Kautschuke, Polyurethanschäume (PUR), Nitrilkautschuk (NBR), Styrol-Butadien-Kautschuk (SBR) und Ethylen-Propylen-Dien-Kautschuk (EPDM) und dergleichen genannt werden.

Als besonders geeignet für die Verwendung im Inneren des Dichtschlauchs hat sich Ethylen-Propylen-Dien-Kautschuk (EPDM) herausgestellt und ganz besonders geeignet geschlossenzelliger Ethylen-Propylen-Dien-Kautschuk (EPDM).

Die Dichtelemente können mit dem Dichtschlauch verklebt oder auch vernäht sein. Dies ermöglicht, sie mit geringem Aufwand dort anzubringen. Alternativ können die Dichtelement direkt auf den Dichtschlauch, welcher in diesem Fall als Träger fungiert, etwa durch direktes Aufspritzen auf das Material des Dichtschlauches formschlüssig aufgebracht werden.

Die Erfindung wird nachfolgend anhand einer bevorzugten Ausführungsform beschrieben, die in den beigefügten Zeichnungen dargestellt ist. In den Zeichnungen zeigen:
- Figur 1 schematisch eine Leitungsdurchführung mit Dichtschlauch;
- Figur 2 eine axiale Ansicht eines erfindungsgemäßen Dichtschlauchs;
- Figur 3 schematisch einen Schnitt entlang der Ebene III-III von Figur 2; und
- Figur 4 in vergrößertem Maßstab das Detail IV von Figur 2.

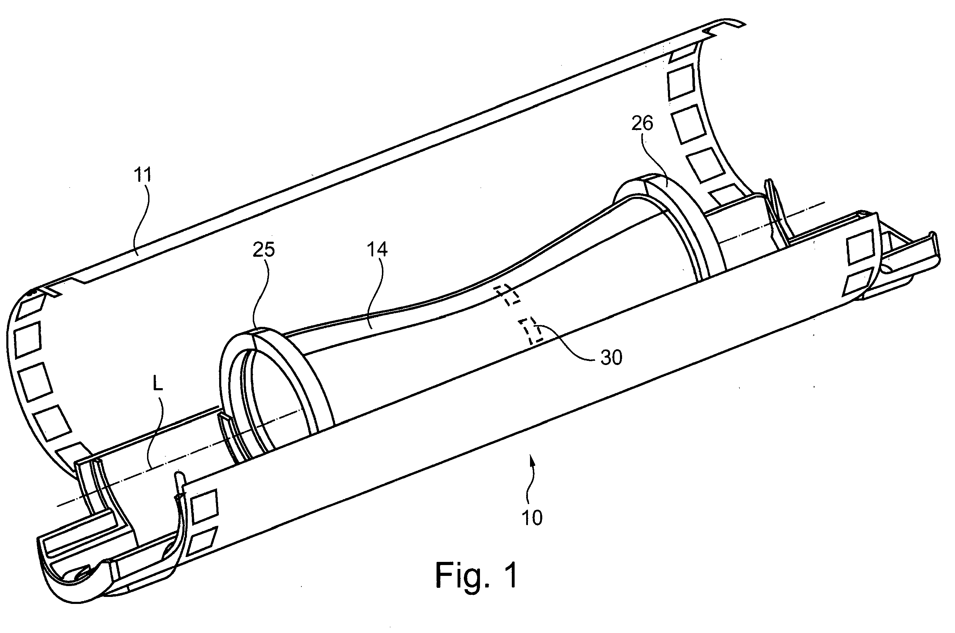

In Figur 1 ist eine Leitungsdurchführung 10 gezeigt, wie sie aus der bereits eingangs genannten DE 10 2006 035 475 A1 bekannt ist. Sie enthält einen Mantel aus einem Hüllrohr 11, welches hier aufgeklappt gezeigt ist. Im Inneren des Hüllrohres 11 ist ein Dichtschlauch 14 angeordnet, der aus einem flexiblen und/oder elastischen, dünnwandigen und gasdichten Gummi-Gewebe oder Folienmaterial besteht. An den axialen Enden des Dichtschlauchs 14 sind Stützringe 25, 26 angeordnet, mit denen der Dichtschlauch so im Inneren des Hüllrohres 11 gehalten ist, dass er im Ausgangszustand geöffnet und (abgesehen von einer leichten Taillierung) zylindrisch ist. Die beiden Stützringe 25, 26 können um eine Längsachse L der Leitungsdurchführung relativ zueinander verdreht werden, wodurch die Wandung des Dichtschlauchs 14 spiralförmig tordiert wird und sich zur Längsache L hin zusammenzuziehen sucht. Dadurch legt sich der Dichtschlauch eng an eine durch ihn hindurchgeführte Leitung oder ein Paket von hindurchgeführten Leitungen an. Dies ist aus dem Stand der Technik grundsätzlich bekannt.

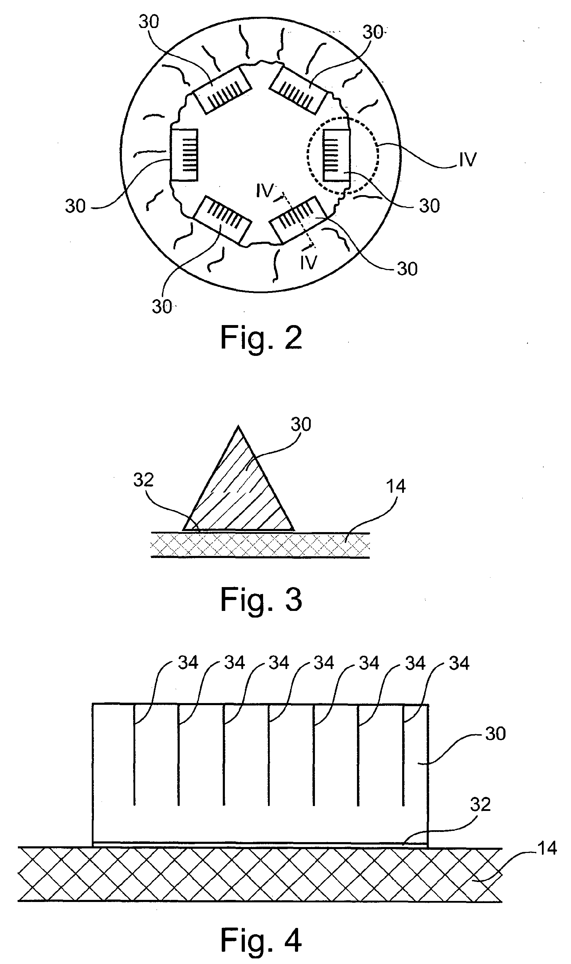

Erfindungsgemäß ist vorgesehen, dass im Inneren des Dichtschlauchs mehrere Dichtelemente 30 vorgesehen sind, die separat voneinander ausgeführt und in Umfangsrichtung im Abstand voneinander auf der Innenseite der Wandung des Dichtschlauchs angeordnet sind. Es werden hier sechs Dichtelemente verwendet, die einen dreieckigen Querschnitt haben und mit einer ihrer Außenseiten mit der Wandung des Dichtschlauchs verklebt sind (siehe die Kleberschicht 32 in den Figuren 3 und 4). Alternativ können die Dichtelemente 30 auch mit der Wandung des Dichtschlauchs 14 vernäht sein.

Die Dichtelemente 30 sind dabei so angeordnet, dass sie sich quer zur Längsachse des Dichtschlauchs erstrecken. Anders ausgedrückt: die Dichtelemente 30 erstrecken sich als (unterbrochener) schmaler Ring in Umfangsrichtung entlang der Innenseite des Dichtschlauchs (siehe auch Figur 1). Als Material für die Dichtelemente 30 ist EPDM besonders vorteilhaft. Jedes der Dichtelemente 30 ist kammartig eingeschnitten (siehe die Schlitze 34 insbesondere in Figur 4), sodass mehrere nebeneinander liegende, aber unabhängig voneinander nachgiebige Dichtsegmente an einem Dichtelement gebildet sind. Die Dichtsegmente haben eine Breite im Bereich von 1 bis 3 mm.

Die Länge der Dichtelemente 30 in Umfangsrichtung ist so bemessen, dass bei dem gezeigten Ausführungsbeispiel mit sechs separaten Dichtelementen sich eine Gesamtlänge der Dichtelemente ergibt, die etwa der Hälfte des Umfangs des Dichtschlauchs 14 entspricht. Bei dem Schlauch mit einem Durchmesser von etwa 105 mm und einer Länge von etwa 220 mm hat jedes der Dichtelemente eine Länge von 25 mm, eine Breite von 12 mm (entspricht etwa 5 % der Schlauchlänge) und eine Höhe von 11 mm.

## Patentansprüche

1. Dichtschlauch (14) für eine Leitungsdurchführung, in der der Dichtschlauch mit um seine Längsachse relativ zueinander verdrehten Enden gehalten werden kann, mit mehreren separaten Dichtelementen (30), die im Inneren, etwa in der Mitte des Dichtschlauches angeordnet sind, **dadurch gekennzeichnet, dass** sich deren Länge im Wesentlichen entlang des Umfangs des Dichtschlauchs erstreckt.

2. Dichtschlauch nach Anspruch 1, **dadurch gekennzeichnet, dass** die Dichtelemente (30) in Umfangsrichtung des Dichtschlauchs (14) voneinander beabstandet sind.

3. Dichtschlauch nach Anspruch 1 oder 2, **dadurch gekennzeichnet, dass** die Gesamtlänge der Dichtelemente (30) kleiner als der Umfang des Dichtschlauchs ist, wobei sich die Gesamtlänge aus der Summe der Längen der Elemente, die in einer Schnittebene liegen, welche durch einen Schnitt durch den Schlauch senkrecht zu seiner Längsachse definiert wird, berechnet.

4. Dichtschlauch nach Anspruch 3, **dadurch gekennzeichnet, dass** die Gesamtlänge der Dichtelemente (30) etwa 50 % des Umfangs des Dichtschlauchs (14) entspricht.

5. Dichtschlauch nach einem der vorhergehenden Ansprüche, **dadurch gekennzeichnet, dass** sechs Dichtelemente (30) gleichmäßig über dem Umfang des Dichtschlauchs (14) angeordnet sind, wobei die Länge des einzelnen Dichtelements (30) etwa 8% des Umfangs des Dichtschlauchs (14) entspricht.

6. Dichtschlauch nach einem der vorhergehenden Ansprüche, **dadurch gekennzeichnet, dass** die Dichtelemente (30) einen dreieckigen Querschnitt haben.

7. Dichtschlauch nach einem der vorhergehenden Ansprüche, **dadurch gekennzeichnet, dass** die Dichtelemente (30) quer zu ihrer Längsrichtung geschlitzt sind.

8. Dichtschlauch nach einem der vorhergehenden Ansprüche, **dadurch gekennzeichnet, dass** die Dichtelemente (30) eine Höhe zwischen 5 mm und 20 mm aufweisen.

9. Dichtschlauch nach einem der vorhergehenden Ansprüche, **dadurch gekennzeichnet, dass** die Dichtelemente (30) aus einem Material, ausgewählt unter Elastomeren, natürlichen und synthetischen Kautschuken, Silikonen, bestehen.

10. Dichtschlauch nach Anspruch 9, **dadurch gekennzeichnet, dass** die Dichtelemente (30) aus geschlossenzelligem Ethylen-Propylen-Dien-Kautschuk bestehen.

11. Dichtschlauch nach einem der vorhergehenden Ansprüche, **dadurch gekennzeichnet, dass** die Dichtelemente (30) mit dem Dichtschlauch (14) verklebt oder vernäht sind.

## Claims

1. Seal hose (14) for a duct for conduits, in which duct the seal hose can be retained with its ends twisted relative to one another about its longitudinal axis, the seal hose (14) having a plurality of separate sealing elements (30) which are arranged in the interior of and approximately in the middle of the seal hose, **characterised in that** the lengths of the sealing elements (30) extend substantially along the circumference of the seal hose.

2. Seal hose according to Claim 1, **characterised in that** the sealing elements (30) are spaced from one another in the circumferential direction of the seal hose (14).

3. Seal hose according to Claim 1 or 2, **characterised in that** the total length of the sealing elements (30) is less than the circumference of the seal hose, the total length being calculated from the sum of the lengths of the elements lying in a sectional plane which is defined by a section through the hose perpendicular to its longitudinal axis.

4. Seal hose according to Claim 3, **characterised in that** the total length of the sealing elements (30) is approximately 50% of the circumference of the seal hose (14).

5. Seal hose according to any one of the preceding claims, **characterised in that** six sealing elements (30) are spaced evenly around the circumference of the seal hose (14), the length of the individual sealing element (30) being approximately 8% of the circumference of the seal hose (14).

6. Seal hose according to any one of the preceding claims, **characterised in that** the sealing elements (30) have a triangular cross section.

7. Seal hose according to any one of the preceding claims, **characterised in that** the sealing elements (30) are slit transversely with respect to their longitudinal direction.

8. Seal hose according to any one of the preceding claims, **characterised in that** the sealing elements (30) have a height from 5 mm to 20 mm.

9. Seal hose according to any one of the preceding claims, **characterised in that** the sealing elements (30) are made of a material selected from elastomers, natural and synthetic rubbers, silicones.

10. Seal hose according to Claim 9, **characterised in that** the sealing elements (30) are made of closed-cell ethylene-propylene-diene rubber.

11. Seal hose according to any one of the preceding claims, **characterised in that** the sealing elements (30) are bonded or stitched to the seal hose (14).

## Revendications

1. Tuyau flexible d'étanchéité (14) pour un passage de conduite dans lequel le tuyau flexible d'étanchéité peut être retenu par ses extrémités tournées l'une par rapport à l'autre autour de son axe longitudinal, ledit tuyau comprenant plusieurs éléments d'étanchéité (30) distincts qui sont disposés à l'intérieur, sensiblement au centre du tuyau d'étanchéité, **caractérisé en ce que** la longueur desdits éléments s'étend sensiblement le long de la circonférence du tuyau flexible d'étanchéité.

2. Tuyau flexible d'étanchéité selon la revendication 1, **caractérisé en ce que** les éléments d'étanchéité (30) sont espacés les uns des autres dans la direction circonférence du tuyau d'étanchéité (14).

3. Tuyau flexible d'étanchéité selon la revendication 1 ou 2, **caractérisé en ce que** la longueur totale des éléments d'étanchéité (30) est inférieure à la circonférence du tuyau d'étanchéité, la longueur totale étant calculée à partir de la somme des longueurs des éléments qui se situent dans un plan de coupe, lequel est défini par une coupe à travers le tuyau perpendiculairement à l'axe longitudinal de ce dernier.

4. Tuyau flexible d'étanchéité selon la revendication 3, **caractérisé en ce que** la longueur totale des éléments d'étanchéité (30) correspond sensiblement à 50 % de la circonférence du tuyau d'étanchéité (14).

5. Tuyau d'étanchéité selon l'une quelconque des revendications précédentes, **caractérisé en ce que** six éléments d'étanchéité (30) sont disposés régulièrement sur toute la circonférence du tuyau d'étanchéité (14), la longueur de chaque élément d'étanchéité (30) correspondant sensiblement à 8 % de la pcirconférence du tuyau d'étanchéité (14).

6. Tuyau flexible d'étanchéité selon l'une quelconque des revendications précédentes, **caractérisé en ce que** les éléments d'étanchéité (30) présentent une section transversale triangulaire.

7. Tuyau flexible d'étanchéité selon l'une quelconque des revendications précédentes, **caractérisé en ce que** les éléments d'étanchéité (30) sont rainurés transversalement à leur direction longitudinale.

8. Tuyau flexible d'étanchéité selon l'une quelconque des revendications précédentes, **caractérisé en ce que** les éléments d'étanchéité (30) présentent une hauteur comprise entre 5 mm et 20 mm.

9. Tuyau d'étanchéité selon l'une quelconque des revendications précédentes, **caractérisé en ce que** les éléments d'étanchéité (30) sont constitués d'un matériau choisi parmi des élastomères, des caoutchoucs naturels et synthétiques, des silicones.

10. Tuyau d'étanchéité selon la revendication 9, **caractérisé en ce que** les éléments d'étanchéité (30) sont constitués d'un caoutchouc éthylène-propylène-diène à cellules fermées.

11. Tuyau flexible d'étanchéité selon l'une quelconque des revendications précédentes, **caractérisé en ce que** les éléments d'étanchéité (30) sont collés ou cousus au tuyau d'étanchéité (14).
